# EUROPEAN PATENT SPECIFICATION

(11) **EP 4 417 355 B1**
(45) Date of publication and mention of the grant of the patent: **25.11.2026**
(21) Application number: 22918325.6
(22) Date of filing: 05.12.2022
(51) Int. Cl.: B23K 26/06, B23K 26/38, B23K 26/0622, B23K 26/082

(54) **METHOD FOR LASER PROCESSING OF SUPERHARD MATERIAL, APPARATUS, AND MACHINE TOOL WITH SUCH APPARATUS**
LASERBEARBEITUNGSVERFAHREN FÜR SUPERHARTES MATERIAL, VORRICHTUNG UND WERKZEUGMASCHINE MIT SOLCHER VORRICHTUNG
PROCÉDÉ DE TRAITEMENT AU LASER POUR MATÉRIAU EXTRA-DUR, APPAREIL, ET MACHINE-OUTIL COMPRENANT UN TEL APPAREIL

(30) Priority: 04.01.2022 CN 202210007485
(43) Date of publication of application: 21.08.2024
(73) Proprietor: Shanghai Nagoya Precision Tools Co., Ltd., Shanghai 201801 (CN)
(72) Inventor: SUN, Sirui, Shanghai 201801 (CN)
(74) Representative: Lermer, Christoph
(86) International application number: PCT/CN2022/136453
(87) International publication number: WO 2023/130873

(56) References cited:
- CN-A- 102 101 217
- CN-A- 108 581 182
- CN-A- 110 369 863
- CN-A- 110 977 205
- JP-A- 2014 083 567
- US-A1- 2006 169 677
- US-A1- 2017 052 381
- V. G. NIZIEV T AL: "INFLUENCE OF BEAM POLARIZATION ON LASER CUTTING EFFICIENCY", JOURNAL OF PHYSICS D: APPLIED PHYSICS, INSTITUTE OF PHYSICS PUBLISHING, BRISTOL, GB, vol. 32, no. 13, 7 June 1999 (1999-06-07), pages 1455 - 1461, XP000930134, ISSN: 0022-3727, DOI: 10.1088/0022-3727/32/13/304

## Description

The present invention relates to a method for laser machining of a superhard material to form a continuous cutting edge without chipping, and an apparatus and a machine tool using same, see claims 1, 6 and 9 respectively.

### Related Art

The phenomenon that the spatial distribution of electric vector oscillation of light waves loses symmetry with respect to the propagation direction of light is referred to as polarization of light. It is a phenomenon that the oscillation vector of transverse waves of light (perpendicular to the propagation direction of the waves) deviates toward some directions. When the oscillation direction of the light vector is only limited to a certain plane during the propagation process of light, the light is referred to as linearly polarized light (or plane-polarized light), which oscillates in only one certain direction, with its magnitude varies with phase and its direction remaining unchanged. When the oscillation vector changes periodically, the light may be elliptically polarized light and circularly polarized light depending on the change period. When the trajectory of the endpoint of the light vector is an ellipse, i.e., the light vector rotates continuously with its magnitude and direction changing regularly with time, the light is elliptically polarized light. When the trajectory of the endpoint of the light vector is a circle, i.e., the light vector rotates continuously with its magnitude remaining unchanged and its direction changing regularly with time, the light is circularly polarized light.

A coordinate system defined by a plane including input and reflected light beams is used. When the polarization vector of the light is in this plane, the light is referred to as P polarization. When the polarization vector is perpendicular to the plane, the light is referred to as S polarization.

Vector polarization light is non-uniform polarization light and has an axisymmetric polarization structure; furthermore, an electric field at an optical axis has the same magnitude and opposite polarization directions, and a polarization state of each point of the light on the cross section of a light beam is different. An electric field vector direction of any point on the light beam cross section of the radially polarized light is always parallel to a radial direction, that is, through each direction of the center of the circle. That is, the radially polarized light refers to polarization light with a polarization direction along the radial direction in the cross section. Radial polarization distribution has an annular light spot mode distribution, belonging to an annular light beam mode. Different from a common base film Gaussian light beam, the light intensity distribution of the annular light beam mode has the characteristics that the intensity at the optical axis is zero, and the intensity of an annular shape around the optical axis is the highest. The light intensity distribution is similar to a ring. Azimuthally polarized light refers to polarization light with a polarization direction perpendicular to the radial direction in the cross section, and the light intensity distribution is similar to a ring.

At present, laser cutting (including pulse laser and continuous laser) is widely applied to cutting and marking of sheet metal and profiles, and is also applied in other fields of machining of superhard material cutters. For industrial production, improving production efficiency has always been an important issue. In studies, technicians realized that besides the power, frequency and pulse width of a pulse laser beam, the polarization state of the light beam will affect the machining efficiency and the machining efficiency. For example: studies of Fan et al., Institute of Laser Technology, Huazhong University of Science and Technology (Laser Technology Vol.12 No.5) and Li et al., School of Science, Xi'an University of Technology (Laser Application Technology Fortieth Volume 12) all show that the machining efficiency and the machining quality of a circular polarization state (C-state) light beam are improved compared with linear polarization states (P-state and S-state). Furthermore, the linear polarization state laser will have the characteristics of different kerfing widths and different slag adhering degrees in different machining directions. Although some studies have shown that the machining efficiency and the machining quality of a radially polarized light (R-state) beam are higher than those of a circular polarization state (C-state) light beam, the circularly polarized light is still most widely used in practical industrial laser machining application, while azimuthal polarization (A-state) and radial polarization (R-state) light are mainly applied to non-machining laser optics such as optical tweezers. This is mainly because many existing technical means can change or modulate the polarization state of laser, but due to the technical conditions and cost factors, the technical means for controlling the azimuthally polarized light and radially polarized light of medium and high power lasers have not been reported in industrial machining application.

As for the machining of a superhard material cutter, at present, the machining of the superhard material cutter mainly based on a diamond cutter mainly adopts discharge wire cutting, grinding, laser and other means at present.

For the manufacturing of a precision diamond milling cutter for micromachining, the roughness of a machining surface obtained by discharge machining is high, it is inevitable that an edge (a cutting edge line) of a machining region is partially or all broken (that is, chips), the machining efficiency is slightly low, a cutting edge arc radius formed thereby is basically determined by a particle size of a material, and it is difficult to obtain a high-quality sharp cutting edge (the cutting edge arc radius is 1000 nanometers or below, the cutting edge line remains continuous, and a chipping phenomenon is avoided.

Grinding machining can obtain an excellent machining surface roughness and a sufficiently small cutting edge arc radius through process control, but chipping is still prone to occur, the machining efficiency is extremely low (less than 1/3 of the discharge wire cutting efficiency), and a complicated shape (that is, a 2-dimensional contour other than a straight light or an arc) cannot be machined.

At present, a laser process for machining a superhard material cutter mainly adopts a short pulse and an ultra-fast laser source and can obtain a surface roughness close to grinding and polishing, benefiting from a non-contact and stress-free machining method. A cutting edge with any shape can be machined, and almost no chipping will occur. The single machining efficiency is high, but due to the influence of the laser focusing characteristic, the focused laser is conical to form a focusing light cone. On the whole focusing light cone, there is an energy density for material removal only at a focusing light spot (that is, a region where a cone vertex of the light cone is located), and the light energy density at each position of an axial cross section of the focusing light cone is low, so it is difficult to realize material removal. Therefore, in the machining depth of the material, the penetrating machining of the material cannot be achieved usually by the one-time action of the laser in a direction perpendicular to a plane (that is, usually represented as a thickness). Instead, the machining surface is repeatedly scanned point by point and layer by layer until the penetrating machining of the material is completed, and all the material in a direction perpendicular to the plane is removed. What is more complicated is that when a laser machining depth increases with the layer-by-layer machining, a machining width located close to one side of an initial machining surface is excessively narrow, so that the focusing light cone is partially blocked by the workpiece surface (that is, the light spot cannot be in contact with the material), and the focusing light spot cannot obtain a sufficient energy density to further remove the material, finally resulting in that the material cannot be completely penetrated. Therefore, laser machining often requires an initial machining width dozens of times larger than a diameter of the focusing light spot, so that the laser requires machining for many times in a machining depth and a machining plane for material removal. Therefore, the laser machining efficiency in the superhard material cutter is generally equivalent to that in discharge wire cutting. Although it is a solution to increase the laser power, that is, to increase the energy density of each part of the laser cone, the surface roughness is also increased with the increase of the laser power, and fine machining (surface roughness, Ra=20nm-50nm) cannot be realized. On the other hand, although some studies have shown that a laser machining cutting edge with a cutting edge arc radius of less than 1000 nanometers can be obtained by controlling a machining direction (for example: laser acts from an interference surface on a rear side of the cutter), generally, the cutting edge arc radius obtained through laser machining is usually determined as a certain value between 1000 nm and 5000 nm, and accurate and flexible adjustability is not achieved.

To improve the machining quality and the machining efficiency, although a related art modulates the polarization state of the laser beam, for example: CN103189160B, the technical means is to obtain a focusing light spot of circular polarization or random polarization light and continuously move the light spot along a contour trajectory of a surface of a machining workpiece to perform laser machining. In the related art of CN209424743U and CN111730214A, the polarization state of the laser beam is also modulated, the technical means is to continuously move the focusing light spot directly along a contour trajectory of a surface of a machining workpiece and keep the linear polarization direction of the laser beam tangent to the contour machining trajectory all the time during the movement, but the influence of laser on the machining efficiency and the machining effect in the plane and two dimensions perpendicular to the plane in actual machining production is not fully considered.
Besides, JP 2014 083567 A (disclosing the preamble of claims 1 and 6), relates to a manufacturing device of a cutting tool comprising a laser oscillation source; a beam expander for expanding a beam diameter of a laser emitted from the laser oscillation source; a polarized light converter for converting the laser whose beam diameter is expanded from linearly polarized light into radially polarized light; a scanner for scanning a laser beam B radiated to a processed surface and a focusing lens 30 for focusing laser beams scanned by the scanner.
US 2017/052381 A1 describes laser delivery systems that feature variable polarizers and beam shapers for altering the polarization and/or shape of the output beam for processing of various materials. The polarization and/or shape of the beam may be varied based on one or more characteristics of the workpiece.

Therefore, the technical solution how to industrially manufacture and optionally obtain a superhard material cutter without chipping and with any shape, a smooth flank surface (that is, close to the surface roughness of grinding and polishing) and various cutting edge arc radii is a technical problem that has not been reported at present and not been well known by technicians, and needs to be solved urgently.

### SUMMARY

An objective of the present invention is to provide a laser machining method for a superhard material, so as to form a continuous cutting edge line without chipping, especially a cutting edge with an arc radius of 1000 nm to 5000 nm.

Another objective of the present invention is to provide a laser machining method for a superhard material, so as to perform fine machining (surface roughness, Ra=20nm-50nm) on the superhard material.

Yet another objective of the present invention is to provide a laser machining method for a superhard material, thereby improving the machining efficiency of the superhard material.

Still another objective of the present invention is to provide a laser machining method for a superhard material, applied to a multi-axis machining device (such as a five-axis machine tool), thereby facilitating the laser precision machining of cutting edge arc radii of various specifications.

A fifth objective of the present invention is to provide an apparatus for machining a superhard material by laser, beneficial to the on-demand machining of cutting edge arc radii for the superhard material, thereby reducing a surface roughness and effectively reducing the machining cost.

According to the present invention, a method of laser machining of a superhard material is defined in claim 1, an apparatus for implementing such method of laser machining of a superhard material is defined in claim 6, and a machining device with such apparatus is defined in claim 9.

Further preferred embodiments are defined in the dependent claims.

The commonly understood laser is light radiated by atoms due to excitation. After absorbing energy, electrons in atoms transition from a low energy level to a high energy level, and then fall back from the high energy level to the low energy level, and the released energy is released in the form of photons. The forms of laser may be divided into continuous laser and pulse laser. According to the pulse width characteristics of the laser, the layer may be divided into thermal laser and cold laser.

Laser emitters, such as but not limited to nanosecond, femtosecond or picosecond lasers, produce laser such as infrared, infrared, blue light, green light, purple light or extreme purple light.

A light source for emitting a laser beam includes a continuous laser source or a pulse laser source, preferably, a pulse laser source. When the pulse laser source is used, a pulse width is 50 fs to 500 ns, preferably, 500 fs to 120 ns, an average power is 10 W to 500 W, preferably, 30 W to 150 W, a pulse repetition frequency is 10 kHz to 10000 kHz, preferably, 30 kHz to 2000 kHz, and a wavelength is 350 nm to 2050 nm, preferably, 520 nm to 1200 nm.

In machining, the workpiece is usually configured to manufacture a material or a semi-finished product of parts or components, and is a machining object during the machining. That is, a product meeting a machining or design requirement is obtained after the workpiece is machined.

Precision machining refers to a machining technology with extremely high machining accuracy and surface quality. For example: in cutter machining, a magnitude, a straightness, a contour degree, a surface roughness, a cutting edge arc radius and a machining accuracy are all less than or equal to a micron level.

The superhard material is, according to the present invention, cermet, diamond (especially artificial polycrystalline diamond) and cubic boron nitride, or a composite material of hard alloy and one or more of the cermet, the diamond and the cubic boron nitride.

The diamond is a mineral including carbon, is an allotrope of graphite, has a chemical formula C, and is also an original body of the common diamond. The graphite can form artificial diamond at a high temperature and under a high pressure. A hardness of the diamond is directional, a hardness of an octahedral crystal face is greater than a hardness of a rhombic dodecahedral crystal face, and the hardness of the rhombic dodecahedral crystal face is greater than a hardness of a hexahedral crystal face.

A diamond compact is also referred to as a polycrystalline diamond compact, is formed by sintering diamond micropowder and a hard alloy substrate under the conditions of ultrahigh pressure and high temperature, has high hardness, high wear resistance and heat conductivity of the diamond, also has the strength and impact toughness of the hard alloy, is an ideal material for manufacturing a cutting edge part of a cutting cutter, and generally has a mirror-polished upper surface to facilitate cutter manufacturing.

A machining device (or machining center) is a machining device with a plurality of motion axes. That is, in the right-handed rectangular coordinate system, X, Y and Z axes moving along a straight line direction, and A, B and C axes rotating around the X, Y and Z axes respectively, such as a such as a numerical control machine tool, are usually loaded with various control software to receive and issue various instructions in the form of codes to automatically machine the workpiece.

A direct relationship between a contour machining trajectory direction of a surface of a workpiece and a polarization direction is decoupled by moving a focusing light spot having linear polarization characteristics and changing a polarization azimuth angle of the focusing light spot, so that the polarization direction is only related to motion of a galvanometer. In laser direct writing machining, different polarization characteristics of linearly polarized light (P-state and C-state), circularly polarized light (C-state), azimuthally polarized light (A-state) and radially polarized light (R-state) are controlled, switched and mixed on a machining pattern.

According to to the present invention, focusing light spots of a linearly polarized laser are moved along a sweep path in a plane, and a polarization angle of the laser is controlled in real time during sweeping, so that the focusing light spots are sequentially arranged along the sweep path according to respective polarization angles to generate a machining pattern, and then the machining pattern as a whole is moved along a moving path on a surface of a material, and the material on the moving path is removed to obtain a required configuration.

Compared with the material machining performed by directly using laser with other polarization states (such as an azimuthal polarization state, a radial polarization state, an elliptic polarization state and a circular polarization state), material machining performed by using a machining pattern formed by the focusing light spots arranged along a sweep path and having a respective polarization angle of the linearly polarized laser to replace laser with other polarization states to serve as a whole body under different specific polarization angles in this way can achieve equivalent machining quality and efficiency. In addition, when the linear polarization state of laser is a P polarization state, the machining pattern also can be obtained by this method, and the machining quality and efficiency equivalent to those of an S polarization state can be achieved, so that one kind of linearly polarized light can be suitable for various machining requirements.

The movement of the focusing light spots changes synchronously with the polarization angle, so that the machining effect achieved by the machining pattern is similar to the machining effect achieved by directly using the azimuthally polarized light and the radially polarized light for machining. Then, the machining pattern is moved along a workpiece surface contour machining trajectory to remove the superhard material in the laser machining plane, thereby shortening a total machining trajectory length, increasing a single machining depth and machining a cutting edge with a required cutting edge arc radius.

According to another laser machining method for a superhard material, a laser is passed through the galvanometer to output focusing light spots on a laser machining plane, so that the focusing light spots are swept along a set sweep path and form a machining pattern, and then the machining pattern is moved along a workpiece surface contour machining trajectory to remove the superhard material in the laser machining plane. When the focusing light spots are swept along the set sweep path, a correlation between the polarization direction and the sweep path is further set, so that the focusing light spots are moved about a center of the machining pattern to produce a machining pattern equivalent to the machining effect directly using the P-state polarization characteristic, S-state polarization characteristic, A-state polarization characteristic, R-state polarization characteristic, C-state polarization characteristic, elliptic polarization state characteristic and A-like and R-like composite polarization state focusing light spots.

The correlation between the polarization direction and the sweep path includes:
the polarization directions of the focusing light spots sequentially arranged along the sweep path are the same, so that the generated machining pattern as a whole has the linear polarization characteristics. The polarization direction is set to be uncorrelated to the sweep path and be perpendicular to an incident surface of the laser machining plane, thereby obtaining a machining pattern with the similar P-state polarization characteristic. The polarization direction is set to be uncorrelated to the sweep path and be parallel to an incident surface of the laser machining plane, thereby obtaining a machining pattern with the similar S-state polarization characteristic.

A trajectory of a light vector endpoint of the focusing light spots in a plane perpendicular to a propagation direction is located on a tangent line of the sweep path of the focusing light spots, so that the machining pattern as a whole has azimuthal polarization characteristics.

A trajectory of a light vector endpoint of the focusing light spots in a plane perpendicular to a propagation direction is located on a straight line passing through the center of the machining pattern, so that the machining pattern as a whole has radial polarization characteristics.

A trajectory of a light vector endpoint of the focusing light spots in a plane perpendicular to a propagation direction intersects with a tangent line of the sweep path of the focusing light spots by an intersection angle of greater than 0° and less than 180°, so that the machining pattern as a whole has azimuthal polarization and radial polarization characteristics.

A trajectory of a light vector endpoint of the focusing light spots in a plane perpendicular to a propagation direction changes periodically and continuously, so that the machining pattern as a whole has circular polarization characteristics or elliptic polarization characteristics.

A polarization driving apparatus is configured to change a polarization azimuth angle of an outgoing laser (passing through the polarization driving apparatus) in real time, preferably, a mechanical apparatus including a hollow rotating motor and a polarization optical element (such as a half wave plate or a Faraday rotator) arranged therein. A laser beam passes through a central through hole of a motor and a polarization optical element arranged on the motor, and the motor is controlled to drive the polarization optical element to revolve to change a polarization direction of outgoing light.

To implement the laser machining method, the present invention further provides an apparatus according to claim 6, including inter alia:
a laser source, configured to generate a laser beam;
a reflecting mirror, configured to change a direction of the laser beam;
a focusing mirror, configured to receive incoming laser light and form focusing light spots;
a galvanometer, configured to control a sweep range of the focusing light spots; and
a polarization driving apparatus, configured to change a polarization azimuth angle of an outgoing laser.

The reflecting mirror of the present invention is mounted on the optical adjusting frame or the galvanometer to change the sweep direction of the focusing light spots as required and form a machining pattern.

The focusing mirror of the present invention includes at least one lens, and is preferentially loaded with a multi-lens field lens.

Taking the machining of a superhard material cutter as an example, a superhard material cutter without chipping and with any shape, a smooth flank surface and various cutting edge arc radii can be efficiently and industrially manufactured and selectively obtained on a machining device adopting the method provided by the present invention.

The technical solution of the present invention has the following beneficial effects:
according to the method provided by the present invention, the focusing light spots with linear polarization characteristics continuously sweep the laser machining plane along the sweep path, and form a machining pattern. In this period, the movement of the focusing light spots changes synchronously with the polarization angle, so that the machining effect achieved by the machining pattern is equivalent to the machining effect achieved by directly using the azimuthally polarized light and the radially polarized light for machining. Then, the machining pattern is moved along a workpiece surface contour machining trajectory, thereby shortening a total machining trajectory length, increasing a single machining depth and machining a cutting edge with a required cutting edge arc radius.

According to the method provided by the present invention, on one hand, the direct relationship between the contour machining trajectory direction of the surface of the workpiece and the polarization direction is decoupled, so that the polarization direction is only related to the sweep direction of the focusing light spots controlled by the galvanometer. On the other hand, the motion of a medium and low-speed mechanical shaft is replaced with the reciprocating motion of a high-speed galvanometer, so that machining trajectory lengths in width and depth directions are greatly reduced, and the machining efficiency is improved.

According to the method provided by the present invention, the machining patterns with the azimuthally polarized light characteristic and the radially polarized light characteristic similar to those of only using a conical fully-reflecting mirror or cavity shaping technology are obtained without using the conical fully-reflecting mirror and other complicated optical elements and by combining with the movement of the linearly polarized light beam and the change of the polarization azimuth angle thereof. In the machining application of the superhard material cutter, the machining efficiency higher than that in the circularly polarized light machining is obtained, and the cutting edge arc radius is controllable and changeable.

Taking the machining of the superhard material cutter as an example, under the same laser output power, by adoption of the method of the present invention, the material removal rate of an existing laser direct writing machining technology can be significantly increased by at least 20%, the depth of single material removal can be increased, the separate cutting in the plane direction can be reduced, the total machining path length can be significantly shorted by 50% or more, and the comprehensive machining efficiency can be averagely improved by 50% or more.

By adoption of the method provided by the present invention, the flexibility of the existing laser direct writing machining technology is significantly improved, and the surface roughness and the edge sharpness at the laser machining position can be controlled as required without changing parameters such as power, frequency and pulse width. Taking the machining of a polycrystalline diamond material as an example, the machining surface roughness can be as low as Ra0.05 micron, and the cutting edge arc radius can be as low as 1000 nanometers or below.

### BRIEF DESCRIPTION OF THE DRAWINGS

FIG. 1 is a schematic diagram of an embodiment of a focusing light spot;
FIG. 2 is a schematic diagram of an embodiment of a laser machining plane;
FIG. 3 is a schematic diagram of an embodiment of a machining pattern formed by a focusing light spot sweeping along a sweep path;
FIG. 4 is a schematic diagram of another embodiment of a machining pattern formed by sweeping a laser machining plane by a focusing light spot;
FIG. 5 is a schematic diagram of an embodiment of a linear polarization state focusing light spot;
FIG. 6 is a schematic diagram of a computer simulation graph of a focusing light spot with the linear polarization state characteristic sweeping a laser machining plane;
FIG. 7 is a schematic diagram of an embodiment of adjusting linear polarization by using a driving polarization apparatus;
FIG. 8 is a schematic diagram of an embodiment of sweeping a laser machining plane by the adjusted linear polarization state obtained in FIG. 7;
FIG. 9 is a distribution schematic diagram of each polarization azimuth angle on a machining pattern with the P-like or S-like polarization state machining effect achieved by the method of the present invention;
FIG. 10 is a distribution schematic diagram of each polarization azimuth angle on a machining pattern with the C-like polarization state machining effect achieved by the method of the present invention;
FIG. 11 is a distribution schematic diagram of each polarization azimuth angle on a machining pattern with the A-like polarization state machining effect achieved by the method of the present invention;
FIG. 12 is a distribution schematic diagram of each polarization azimuth angle on a machining pattern with the R-like polarization state machining effect achieved by the method of the present invention;
FIG. 13 is a distribution schematic diagram of each polarization azimuth angle on a machining pattern with the A-like or R-like composite polarization state machining effect achieved by the method of the present invention;
FIG. 14 is a distribution schematic diagram of each polarization azimuth angle on a machining pattern with various machining effects achieved when the method of the present invention is applied to a square boundary;
FIG. 15 is a distribution schematic diagram of each polarization azimuth angle on a machining pattern with the machining effects of a plurality of polarization state mixed characteristics achieved by the method of the present invention;
FIG. 16 is a schematic diagram of an embodiment of a path of laser machining kerfing in a related art;
FIG. 17 is a schematic diagram of an embodiment of a kerfing laser machining path implemented by the method of the present invention; and
FIG. 18 is a schematic diagram of the laser machining path shown in FIG. 17 from another perspective.

### DETAILED DESCRIPTION

The technical solution of the present invention is described in detail with reference to the accompanying drawings. Embodiments of the present invention are intended only to illustrate and not to limit the technical solution of the present invention. Although the present invention is described in detail with reference to preferred embodiments, those of ordinary skill in the art should understand that modifications or equivalent substitutions may be made to the technical solution of the present invention without departing from the spirit and scope of the technical solution of the present invention, and should all be covered within the scope of the claims of the present invention.

When the superhard material is machined by laser, a superhard material structure to be machined and removed is determined, and the contour of the superhard material structure is obtained. A workpiece plane where the focusing light spot is located is a laser machining plane. The contour of the plane defines a first boundary of laser machining. The total travel of the laser from being in first contact with the structure to finally completely passing through the structure is a second boundary, and is usually considered as the machining depth of the laser.

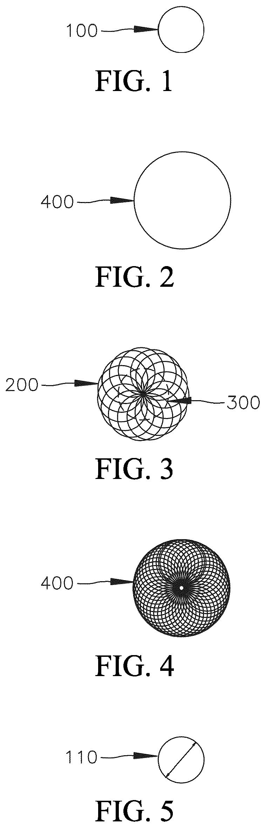

Taking the machining of a circular hole with a thickness as an example, the contour of the superhard material structure to be machined and removed is a cylinder, and a plane where the contour intersects with a laser incident direction, that is, a laser machining plane, is a circle. The contour of the circle is the first boundary of laser machining, and a focusing light spot 100 (the shape is shown in FIG. 1) of the laser acts on the first boundary, so that the hard material in the first boundary is removed.

Normally, the area of the focusing light spot acting on the laser machining plane is less than or equal to that of the first boundary. In a case that the area of the focusing light spot is equal to that of the first boundary, through one-time action, all the superhard materials in the laser machining plane are removed at a place where the energy of the focusing light spot can reach. In a case that the area of the focusing light spot acting on the laser machining plane is less than that of the first boundary, the focusing light spot is usually required to act on the laser machining plane for many times to remove the superhard material at a place where the focusing light spot can reach. With the increase of the machining depth, the superhard material is machined and removed layer by layer by the laser along the first boundary.

The area of the removed material can be enlarged by overlapping the plurality of focusing light spots 100. For example: taking the pattern shown in FIG. 2 as an example, in a case that the area defined by a circular boundary 400 as a whole acts on the superhard material, the efficiency of removing the superhard material can be improved, and the machining time can be shortened. To achieve this objective, it is necessary to move the focusing light spots along a sweep path to form a machining pattern in the circular boundary 400.

The laser light spot can form a machining pattern along the sweep path by controlling the galvanometer. As shown in FIG. 3, the focusing light spot 100 sweeps along an annular sweep path 300 to form a machining pattern 200. The focusing light spots 100 act on and are superposed with each other for many times to form a machining pattern. It can be seen from the comparison between FIG. 3 and FIG. 4 that in a case that the superhard material in the circular boundary 400 is completely removed, it is necessary to increase the action frequencies of the focusing light spot 100, that is, to increase an intensity. Although the machining pattern is not completely presented on the structure, along with the movement of the focusing light spots, a complete machining pattern located in the circular boundary 400 can be seen by combining the focusing light spots at each moment, for example: by a computer simulation mode. Therefore, at the beginning of machining the laser machining plane, one complete machining pattern located in the circular boundary 400 can be generated to enlarge the area acting on the superhard material. The structure can be formed by moving the machining pattern on the superhard material as a whole, for example: a wider kerf (compared with a kerf generated by a single focusing light spot on the superhard material). The pattern can be obtained by drawing. Under the aid of a computer, the drawing efficiency can be improved, and machining data, for example: machining coordinates and a moving speed, of the focusing light spots is formed, thereby facilitating the automatic laser machining on a numerical control machine tool. That is, the focusing light spot sweeps on the laser machining plane along a set machining pattern to remove the superhard material.

After the laser beam is emitted from the light source and after a series of (conventional) changes such as beam expansion and collimation, the laser beam passes through the polarization driving apparatus and then enters the galvanometer, the light beam direction is changed by a reflecting mirror in the galvanometer controlled by the computer to sweep the machining pattern obtained as required, and the laser with the changed direction is finally focused by a field lens to form a specific machining pattern formed by the sweep path of the focusing light spot. A laser is passed through the galvanometer to output focusing light spots on a laser machining plane, so that the focusing light spots sweep along a set sweep path and form a machining pattern, and then the machining pattern is moved along a workpiece surface contour machining trajectory to remove the superhard material in the laser machining plane.

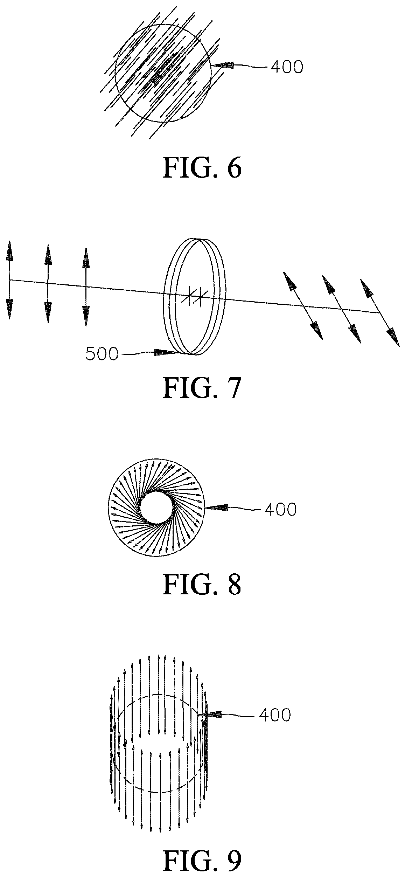

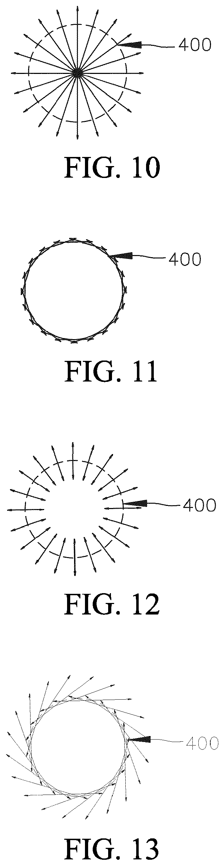

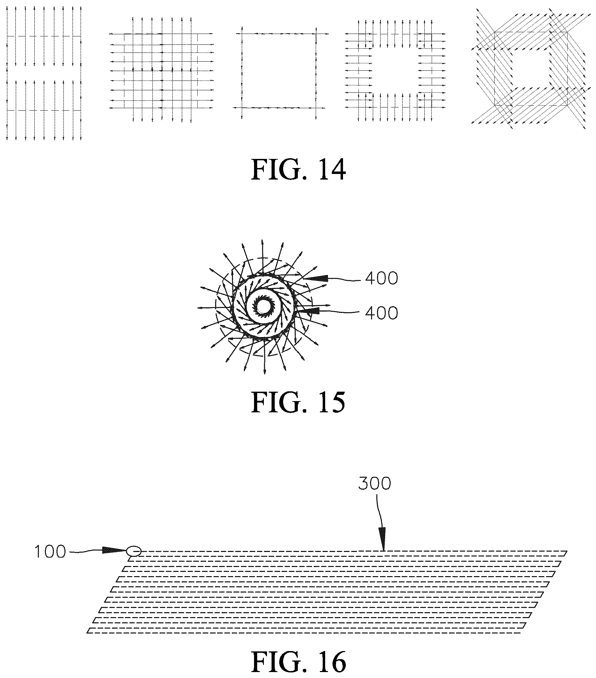

The focusing light spots are moved about a center of the machining pattern and change synchronously with the polarization angles, so that each of the focusing light spots is sequentially arranged along the sweep path at the respective polarization angle to generate a machining pattern, and then the machining pattern a whole is moved on a surface of a workpiece for material removal to achieve a machining effect with machining quality and machining efficiency equivalent to those of material removal directly using azimuthally polarized light and radially polarized light. FIG. 5 is a focusing light spot 110 with the linear polarization characteristic according to this embodiment. The focusing light spot machines the superhard material in the circular boundary, and the polarization azimuth angle of the focusing light spot at each moment remains unchanged, as shown in FIG. 6. Before the focusing light spot sweeps the laser machining plane, the machining pattern generated by the focusing light spot can be obtained through computer simulation; furthermore, during machining, the machining effect consistent with that of the machining pattern can be achieved by sweeping along the sweep path. In the process of removing the superhard material by the focusing light spot, the polarization azimuth angle of the laser should be controlled in real time according to the sweep speed of the focusing light spot or the position of the reflecting mirror, thereby ensuring that an intersection angle between a polarization direction of an outgoing linearly polarized light and a motion direction of the current focusing light spot on the sweep path always conforms to the required machining angle. These machining angles are usually set according to the machining requirements, so that various machining patterns can be obtained by adjusting the included angle between the sweep path and polarization direction of the focusing light spot and a sweep path. These machining patterns are equivalent to the machining effect generated by machining the superhard material by the laser with the polarization characteristic. For example: the polarization direction is set to be not related to the sweep path and be perpendicular or parallel to the incident plane of the laser machining plane, so as to obtain a machining pattern with the similar P-state or S-state polarization characteristic. The pattern shown in FIG. 9 has the effect equivalent to that of the P polarization state or S polarization state laser machining, so the pattern is referred to as a P-like polarization state machining pattern or an S-like polarization state machining pattern. For another example: a trajectory of a light vector endpoint of each focusing light spot in a plane perpendicular to a propagation direction changes periodically and continuously so as to obtain a machining pattern with the C-like state polarization characteristic. The pattern shown in FIG. 10 is equivalent to the effect of laser machining with the C polarization state, so the pattern is referred to as a C-like polarization state machining pattern. For another example: a trajectory of a light vector endpoint of each of the focusing light spots in a plane perpendicular to a propagation direction is located on a tangent line of the sweep path of the focusing light spots, so that the machining pattern as a whole has azimuthal polarization characteristics. The pattern shown in FIG. 11 is equivalent to the effect of laser machining with an A polarization state, so the pattern is referred to as an A-like polarization state machining pattern. For another example: a trajectory of a light vector endpoint of each of the focusing light spots in a plane perpendicular to a propagation direction is located on a straight line passing through the center of the machining pattern, so that the machining pattern as a whole has radial polarization characteristics. The sweep pattern shown in FIG. 12 is equivalent to the effect of laser machining with an R polarization state, so the sweep pattern is referred to as an R-like polarization state machining pattern. The sweep pattern can have the similar effect of the A polarization state and R polarization state composite laser machining by adjusting the machining angle. A trajectory of a light vector endpoint of each of the focusing light spots in a plane perpendicular to a propagation direction intersects with a tangent line of the sweep path of the focusing light spots by an intersection angle of greater than 0° and less than 180°, so that the machining pattern as a whole has azimuthal polarization and radial polarization characteristics. Therefore, the pattern is referred to as an A-like and R-like composite polarization state machining pattern, as shown in FIG. 13. Various patterns, such as square, circular, point-like and linear patterns and a combination thereof, can be formed by changing the sweep path and combining with the laser with the specific polarization characteristic, as shown in FIG. 14, so that various complicated forms can be achieved. The machining pattern with various polarization state mixed characteristic machining effect can be obtained by combining and setting the polarization direction and the sweep path, as shown in FIG. 15, thereby meeting the complicated machining requirement.

The polarization azimuth angle of the outgoing (passing through the polarization driving apparatus) laser beam is changed by a polarization driving apparatus 500 in real time, as shown in FIG. 7. The polarization azimuth angle distribution of the focusing light spots at various positions of the changed machining pattern is shown in FIG. 8, and the focusing light spots are located in the circular boundary 400. In this embodiment, a mechanical apparatus including a hollow rotating motor and a polarization optical element (such as a half wave plate or a Faraday rotator) arranged therein is preferentially selected. A laser beam passes through a central through hole of a motor and a polarization optical element arranged on the motor, and the motor is controlled to drive the polarization optical element to revolve to change a polarization direction of outgoing light. The polarization driving apparatus may further include a quarter-wave plate as a polarizer to ensure that the incident light incident on the polarization optical element is linearly polarized light. In addition to the aforementioned mechanical rotary structure, the polarization driving apparatus can further be an electronic polarization driving apparatus completely including a liquid crystal phase retarder or a liquid crystal polarization rotator not generating mechanical motion or a combination of a mechanical type and an electronic type, and technicians can completely determine the specific implementation manners according to the adjusting bandwidth and cost required by an optical system.

The machining pattern with the R-like state is generated by controlling a relationship between the polarization direction and the sweep path of the laser, so that the machining depth of the laser is increased, or the adjustable machining of the cutting edge arc radius can be realized as required by the machining pattern with the A-like state.

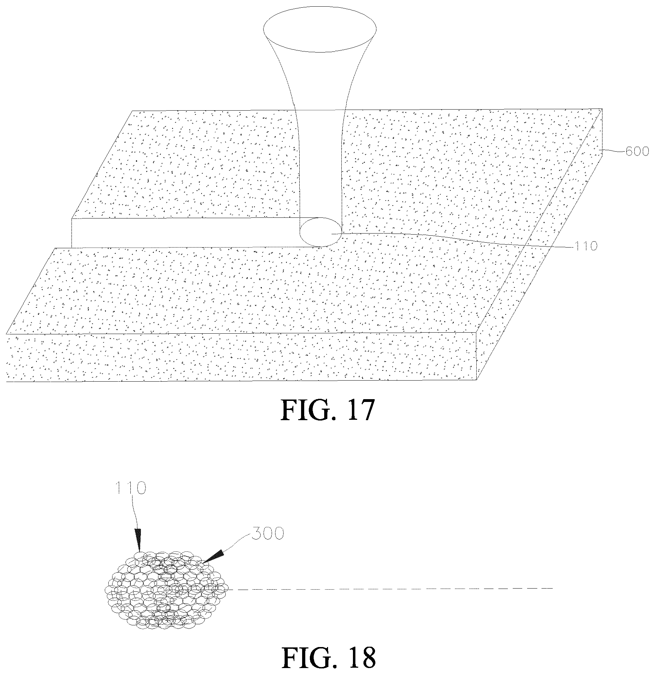

During cutter machining, generally, due to the influence of laser focusing characteristics, it is necessary to use the focusing light spots to scan all to-be-removed regions of the material point by point and layer by layer, so that the laser requires reciprocating machining for many times in the machining depth direction and the plane direction for material removal, as shown in FIG. 16. In this embodiment, firstly, the machining pattern and the sweep path of the focusing light spot can be set according to the required machining width on the laser machining plane, so that the line-by-line mechanical axis movement of the focusing light spot on the laser machining plane can be effectively reduced, as shown in FIG. 17 and FIG. 18. Taking the case where a kerf with a width of N is cut in the superhard material 600 as an example, in a case that the focusing light spot 100 with a diameter of n is directly used, machining on the laser machining plane can be performed by the mechanical shaft reciprocating for N/n times. In a case that the processing depth of the kerf of the superhard material reaches 1.6 mm, 40 times or more are required. A pattern with a width of N is swept by the focusing light spot 110 controlled by the galvanometer and with the linear polarization characteristic, and the mechanical shaft only requires one-time relative movement on a length direction of the kerf to cover the material in the whole range and remove the material, so that the machining efficiency can be significantly improved.

The polarization-like state of the machining pattern swept by the focusing light spot is set as an R state with a higher material removal rate, so that a larger single machining depth can be obtained, thereby reducing the layer-by-layer mechanical shaft movement of the focusing light spot in the depth direction. The sweep speed of the pattern controlled by the galvanometer is generally at least 10 times or more than the control speed of the mechanical shaft movement, so this machining mode can greatly improve the overall machining efficiency.

During finish machining of an edge part of the cutter, it is often necessary to process cutters with different cutting edge arc radii according to different use conditions of the cutters (for example: a diamond micro-milling cutter for micro cutting requires a cutting edge arc radius less than 300 nm, and a diamond replaceable cutter for roughly cutting titanium alloy requires a cutting edge arc radius of about 2500 nm to 4000 nm). In the general machining, it is necessary to completely use different machining processes such as linear cutting, grinding, laser and polishing to pertinently manufacture a cutter cutting edge with a cutting edge arc radius of a certain size range, so that the production process link and the complexity are greatly improved. In this embodiment, the polarization-like state of the sweep pattern is set, so that the polarization direction of the linearly polarized light emitted from the polarization driving apparatus always keeps an included angle with the movement direction of the current focusing light spot on the sweep path, and a machining pattern with the A-like state (that is, the polarization direction is set to be always parallel to the sweep path) or a machining pattern with the R-state polarization characteristic (that is, the polarization direction is set to be always parallel to the sweep path), or a machining pattern with a similar A-state and R-state composite polarization characteristic (that is, the polarization direction is set to always keep a fixed included angle with the sweep path) are obtained. The edge of the superhard material is removed by the machining patterns with different polarization characteristics, so that cutting edges with different edge sharpness, that is, different cutting edge arc radii, can be controllably obtained. Further, the gradual change and difference between the cutting edge sharpness of different parts can even be realized. Taking cutters with the machining requirements shown in the following Table 1 and Table 2 as an example, machining is implemented by a laser machining scheme shown in Table 3 and Table 4.

**Table 1**

| Cutter Type | Edge Material | Edge Thickness (Machining Depth) | Edge Length (Machining Length) | Cutting Edge Requirement |
|---|---|---|---|---|
| Two-edge end mill with a diameter of 3 mm | 1-micron particle size PCD | 0.8 mm | 6.5 mm | The machining surface is bright and delicate |
| | | | | The cutting edge arc radius is as small as possible |
| | | | | Do not accept any broken edge |

**Table 2**

| Cutter Type | Edge Material | Edge Thickness (Machining Depth) | Edge Length (Machining Length) | Cutting Edge Requirement |
|---|---|---|---|---|
| Four-edge reamer with a diameter of 10 mm | 10-micron particle size PCD | 1.6 mm | 2mm | The machining surface is bright and delicate |
| | | | | The cutting edge arc radius is moderate |
| | | | | Try not to have any broken edge |

**Table 3**

| Serial Number Of Embodiments | Machining Process | Total Machining Path Length | Total Machining Time | Actual Machining Speed Of Edge | Measured Cutting Edge Arc Radius | Chipping Condition |
|---|---|---|---|---|---|---|
| 1-0 | A general process is used, that is, the focusing light spot of the circular polarization state laser moves according to the cutting edge contour trajectory of the cutter for machining to form an edge part of the cutter | About 200 mm | About 26 min | 0.5 mm/min | 1-2 microns | None |
| 1-1 | The sweep pattern with the circular polarization state characteristic moves according to the cutting edge contour trajectory of the cutter for machining to form the edge part of the cutter | About 70 mm | About 18 min | 0.7 mm/min | 1-2 microns | None |
| 1-2 | The focusing light spot with the radial polarization state characteristic sweeps the machining pattern to move along the edge part contour trajectory of the cutter for machining to form the edge part of the cutter | About 70 mm | About 12min | 1.1 mm/min | 3-4 microns | None |
| 1-3 | The sweep pattern with the azimuthal polarization state characteristic moves according to the cutting edge contour trajectory of the cutter for machining to form the edge part of the cutter | About 70 mm | About 16 min | 0.8 mm/min | 1-1.5 microns | None |
| 1-4 | The sweep pattern with the 45° azimuthal polarization state characteristic moves according to the cutting edge contour trajectory of the cutter for machining to form the edge part of the cutter | About 70 mm | About 14 min | 0.9 mm/min | 1.5-2 microns | None |
| 1-5 | The sweep pattern with the 15° azimuthal polarization state characteristic moves according to the cutting edge contour trajectory of the cutter for machining to form the edge part of the cutter | About 70 mm | About 13 min | 1 mm/min | 1-1.5 microns | None |
| 1-6 | The sweep pattern with the azimuthal polarization state characteristic moves according to the cutting edge contour trajectory of the cutter for machining to form the edge part of the cutter | About 70 mm | About 20 min | 0.7 mm/min | 0.7-0.9 microns | None |

**Table 4**

| Serial Number Of Embodiments | Machining Process | Total Machining Path Length | Total Machining Time | Actual Machining Speed Of Edge | Measured Cutting Edge Arc Radius | Chipping Condition |
|---|---|---|---|---|---|---|
| 2-0 | A general process is used, that is, the focusing light spot of the circular polarization state laser moves according to the cutting edge contour trajectory of the cutter for machining to form an edge part of the cutter | About 240 mm | About 30 min | 0.26 mm/min | 1-2 microns | None |
| 2-1 | The sweep pattern with the circular polarization state characteristic moves according to the cutting edge contour trajectory of the cutter for machining to form the edge part of the cutter | About 80 mm | About 21 min | 0.38 mm/min | 1-2 microns | None |
| 2-2 | The focusing light spot with the radial polarization state characteristic sweeps the machining pattern to move along the edge part contour trajectory of the cutter for machining to form the edge part of the cutter | About 80 mm | About 15 min | 0.53 mm/min | 3-4 microns | None |
| 2-3 | The sweep pattern with the azimuthal polarization state characteristic moves according to the cutting edge contour trajectory of the cutter for machining to form the edge part of the cutter | About 80 mm | About 20 min | 0.4 mm/min | 1-1.5 microns | None |
| 2-4 | The sweep pattern with the 45° azimuthal polarization state characteristic moves according to the cutting edge contour trajectory of the cutter for machining to form the edge part of the cutter | About 80 mm | About 18 min | 0.44 mm/min | 1.5-2 microns | None |
| 2-5 | The sweep pattern with the 15° azimuthal polarization state characteristic moves according to the cutting edge contour trajectory of the cutter for machining to form the edge part of the cutter | About 80 mm | About 17 min | 0.47 mm/min | 1-1.5 microns | None |
| 2-6 | The sweep pattern with the azimuthal polarization state characteristic moves according to the cutting edge contour trajectory of the cutter for machining to form the edge part of the cutter | About 80 mm | About 24 min | 0.4 mm/min | 0.6-0.8 microns | None |

In conclusion, according to the laser machining method of this embodiment, the machining efficiency is significantly improved, the specific cutting edge arc radius can be obtained selectively, the machined surface roughness (Ra≤50nm) is also considered, and the occurrence of cutting edge chipping is significantly reduced.

According to the laser machining method of this embodiment, the laser emitted from a laser emitter is emitted into a cavity channel, then is emitted out of the cavity channel, and then enters a laser projection relay part, the laser projection relay part changes the propagation path of the laser and then emits the laser, and the laser is finally received by a light-emitting part to machine the workpiece. The laser is propagated in the cavity channel, or along a straight line, or along a broken line. The laser is propagated at an outlet end of the cavity channel along a straight line. In a right-handed rectangular coordinate system, a rotating shaft is an A axis, a B axis or a C axis, so that the laser emitted by the light-emitting part is distributed around the direction of the rotating shaft, the laser is focused in the range of the rotating shaft, that is, in a rotating (circular) surface with a radius of 100 mm and taking the rotating shaft as a center, in particular, focused on a rotating axis. Laser machining is implemented in a rotating manner. In this embodiment, the cavity channel is arranged on the Y axis, the rotating shaft is the B axis, and the light-emitting part rotates around the B axis.

The apparatus provided by the above embodiments is mounted on a machining device, for example: by a space five-axis laser machining scheme formed by combining three linear motion shafts, one rotating motion shaft for fixing the workpiece and one laser beam rotating shaft, the workpiece can be machined in a multi-axis manner to manufacture products with complex and diversified structures. For example: the machine tool has at least three linear shafts, the apparatus of the present invention is mounted on one linear shaft (for example: arranged in a plane determined by the X axis and the Z axis and moving linearly along the Z axis), and a rotation positioning mechanism is mounted on another linear shaft to drive the rotation positioning of the machined workpiece (for example: the workpiece is arranged in a plane determined by the X axis and the Y axis), thereby eliminating the situation that the relative positions of the light beam and the rotating shaft of a turntable cannot be kept due to the factors such as stress, vibration, elastic deformation or temperature, improving the precision of the laser machining, and facilitating the laser machining of parts of various specifications.

## Claims

1. A method for laser machining of a superhard material (600), wherein the superhard material is cermet, diamond and cubic boron nitride, or a composite material of alloy and one or more of the cermet, the diamond and the cubic boron nitride, the method comprising: decoupling a direct relationship between a contour machining trajectory direction of a surface of a workpiece and a polarization direction by moving a focusing light spot (100) having linear polarization characteristics,
the method **characterized by**:
changing a polarization azimuth angle of the focusing light spot (100), so that the polarization direction is only related to motion of a galvanometer, wherein focusing light spots (100) of a linearly polarized laser are moved along a sweep path in a plane, and a polarization angle of the laser is controlled in real time during sweeping, so that the focusing light spots (100) are sequentially arranged along the sweep path according to respective polarization angles to generate a machining pattern (200), then the machining pattern (200) as a whole is moved along a moving path on a surface of a material, and the material on the moving path is removed to obtain a required configuration.

2. The method for a superhard material (600) according to claim 1, wherein a polarization azimuth angle of an outgoing laser is changed by a polarization driving apparatus (500) in real time, a laser beam passes through a central through hole of a motor and a polarization optical element arranged on the motor, and the motor is controlled to drive the polarization optical element to revolve to change a polarization direction of outgoing light.

3. The method for a superhard material (600) according to claim 1, wherein focusing light spots (100) are moved about a center of a machining pattern (200) and are changed synchronously with polarization angles, so that the focusing light spots (100) are sequentially arranged along the sweep path according to respective polarization angles to generate the machining pattern (200), and then the machining pattern (200) as a whole is moved on the surface of the workpiece for material removal, to achieve a machining effect with machining quality and machining efficiency equivalent to those of material removal directly using azimuthally polarized light and radially polarized light.

4. The method for a superhard material (600) according to claim 1, wherein a laser is passed through the galvanometer to output focusing light spots (100) on a laser machining plane, so that the focusing light spots (100) are swept along a set sweep path and form a machining pattern (200), and then the machining pattern (200) is moved along the contour machining trajectory of the surface of the workpiece to remove a superhard material (600) in the laser machining plane;
when the focusing light spots (100) are swept along the set sweep path, a correlation between the polarization direction and the sweep path is further set, so that the focusing light spots (100) are moved about a center of the machining pattern (200); and
when polarization directions of the focusing light spots (100) sequentially arranged along the sweep path are the same, the generated machining pattern (200) as a whole has linear polarization characteristics; or
a trajectory of a light vector endpoint of each of the focusing light spots (100) in a plane perpendicular to a propagation direction is located on a straight line passing through the center of the machining pattern (200), so that the machining pattern (200) as a whole has radial polarization characteristics; or
a trajectory of a light vector endpoint of each of the focusing light spots (100) in a plane perpendicular to a propagation direction is located on a tangent line of the sweep path of the focusing light spots (100), so that the machining pattern (200) as a whole has azimuthal polarization characteristics; or
a trajectory of a light vector endpoint of each of the focusing light spots (100) in a plane perpendicular to a propagation direction intersects with a tangent line of the sweep path of the focusing light spots (100) by an intersection angle of greater than 0° and less than 180°, so that the machining pattern (200) as a whole has azimuthal polarization and radial polarization characteristics; or
a trajectory of a light vector endpoint of each of the focusing light spots (100) in a plane perpendicular to a propagation direction changes periodically and continuously, so that the machining pattern (200) as a whole has circular polarization characteristics or elliptic polarization characteristics.

5. The method for a superhard material (600) according to claim 1, wherein the method is applied to a machining device to machine a superhard material (600) to form a cutting edge of a cutter.

6. An apparatus for implementing the method for laser machining of a superhard material (600) according to claim 1, comprising:
a laser source, configured to generate a laser beam;
a reflecting mirror, configured to change a direction of the laser beam, **characterized in that** the apparatus further comprising:
a focusing mirror, configured to receive incoming laser light and form focusing light spots (100), to give the focusing light spot (100) linear polarization characteristics;
a galvanometer, configured to control a sweep range of the focusing light spots (100); and
a polarization driving apparatus (500), configured to change a polarization azimuth angle of an outgoing laser, in such a way that the focusing light spot with linear polarization characteristics continuously sweeps the laser machining plane along the sweep path, and forms a machining pattern, wherein the machining pattern is moved along a workpiece surface contour machining trajectory, and thereby decoupling
a direct relationship between a contour machining trajectory direction of a surface of a workpiece and a polarization direction, so that the polarization direction is only related to motion of the galvanometer.

7. The apparatus according to claim 6, wherein the reflecting mirror is mounted on an optical adjusting frame or the galvanometer to change a sweep direction of the focusing light spots (100) as required and form a machining pattern (200).

8. The apparatus according to claim 6, wherein the focusing mirror is equipped with a multi-lens field lens.

9. A machining device, comprising the apparatus according to claim 8, wherein the machining device is a machining device with a plurality of motion axes which is in the right-handed rectangular coordinate system, X, Y and Z axes moving along a straight line direction, and A, B and C axes rotating around the X, Y and Z axes respectively.

## Patentansprüche

1. Verfahren zur Laserbearbeitung eines superharten Materials (600), wobei das superharte Material Cermet, Diamant und kubisches Bornitrid oder ein Verbundmaterial aus einer Legierung und einem oder mehreren der Materialien Cermet, Diamant und kubisches Bornitrid ist, wobei das Verfahren Folgendes umfasst: Entkoppeln einer direkten Beziehung zwischen einer Konturbearbeitungsbahnrichtung einer Oberfläche eines Werkstücks und einer Polarisationsrichtung durch Bewegen eines fokussierten Lichtflecks (100) mit linearen Polarisationsmerkmalen,
**dadurch gekennzeichnet, dass**:
ein Polarisationsazimutwinkel des fokussierten Lichtflecks (100) geändert wird, sodass die Polarisationsrichtung nur mit der Bewegung eines Galvanometers zusammenhängt, wobei fokussierte Lichtflecke (100) eines linear polarisierten Lasers entlang eines Abtastpfades in einer Ebene bewegt werden und ein Polarisationswinkel des Lasers während des Abtastens in Echtzeit gesteuert wird, sodass die fokussierten Lichtflecke (100) entlang des Abtastpfades entsprechend ihren jeweiligen Polarisationswinkeln sequenziell angeordnet werden, um ein Bearbeitungsmuster (200) zu erzeugen;
anschließend wird das Bearbeitungsmuster (200) als Ganzes entlang eines Bewegungspfades auf einer Oberfläche eines Materials bewegt, und das Material entlang des Bewegungspfades wird abgetragen, um eine erforderliche Form zu erhalten.

2. Verfahren für ein superhartes Material (600) nach Anspruch 1, wobei ein Polarisationsazimutwinkel eines austretenden Lasers durch eine Polarisationsantriebseinrichtung (500) in Echtzeit geändert wird, wobei ein Laserstrahl durch eine zentrale Durchgangsbohrung eines Motors und ein an dem Motor angeordnetes Polarisationsoptikelement verläuft, und wobei der Motor derart gesteuert wird, dass er das Polarisationsoptikelement zu einer Umdrehung antreibt, um eine Polarisationsrichtung des austretenden Lichts zu ändern.

3. Verfahren für ein superhartes Material (600) nach Anspruch 1, wobei fokussierte Lichtflecke (100) um ein Zentrum eines Bearbeitungsmusters (200) herum bewegt und synchron mit Polarisationswinkeln geändert werden, sodass die fokussierten Lichtflecke (100) entlang des Abtastpfades entsprechend ihren jeweiligen Polarisationswinkeln sequenziell angeordnet werden, um das Bearbeitungsmuster (200) zu erzeugen, und anschließend das Bearbeitungsmuster (200) als Ganzes auf der Oberfläche des Werkstücks zum Materialabtrag bewegt wird, um eine Bearbeitungswirkung zu erzielen, die hinsichtlich der Bearbeitungsqualität und der Bearbeitungseffizienz jener vergleichbar ist, die durch direkten Materialabtrag unter Verwendung von azimutal polarisiertem Licht und radial polarisiertem Licht erreicht wird.

4. Verfahren für ein superhartes Material (600) nach Anspruch 1,
wobei ein Laserstrahl durch einen Galvanometerscanner geleitet wird, um fokussierte Lichtflecke (100) auf einer Laserbearbeitungsebene auszugeben, sodass die fokussierten Lichtflecke (100) entlang eines vorgegebenen Abtastpfades abgetastet werden und ein Bearbeitungsmuster (200) bilden, und anschließend das Bearbeitungsmuster (200) entlang der Konturbearbeitungsbahn der Oberfläche des Werkstücks bewegt wird, um ein superhartes Material (600) in der Laserbearbeitungsebene abzutragen;
wobei beim Abtasten der fokussierten Lichtflecke (100) entlang des vorgegebenen Abtastpfades ferner eine Korrelation zwischen der Polarisationsrichtung und dem Abtastpfad festgelegt wird, sodass die fokussierten Lichtflecke (100) um ein Zentrum des Bearbeitungsmusters (200) herum bewegt werden; und
wenn die Polarisationsrichtungen der entlang des Abtastpfades sequenziell angeordneten fokussierten Lichtflecke (100) gleich sind, das erzeugte Bearbeitungsmuster (200) als Ganzes lineare Polarisationsmerkmale aufweist; oder
wenn eine Bahn eines Endpunkts eines Lichtvektors eines jeden der fokussierten Lichtflecke (100) in einer Ebene senkrecht zu einer Ausbreitungsrichtung auf einer Geraden liegt, die durch das Zentrum des Bearbeitungsmusters (200) verläuft, sodass das Bearbeitungsmuster (200) als Ganzes radiale Polarisationsmerkmale aufweist; oder
wenn eine Bahn eines Endpunkts eines Lichtvektors eines jeden der fokussierten Lichtflecke (100) in einer Ebene senkrecht zu einer Ausbreitungsrichtung auf einer Tangente an den Abtastpfad der fokussierten Lichtflecke (100) liegt, sodass das Bearbeitungsmuster (200) als Ganzes azimutale Polarisationsmerkmale aufweist; oder
wenn eine Bahn eines Endpunkts eines Lichtvektors eines jeden der fokussierten Lichtflecke (100) in einer Ebene senkrecht zu einer Ausbreitungsrichtung eine Tangente an den Abtastpfad der fokussierten Lichtflecke (100) unter einem Schnittwinkel von mehr als 0° und weniger als 180° schneidet, sodass das Bearbeitungsmuster (200) als Ganzes azimutale und radiale Polarisationsmerkmale aufweist; oder
wenn sich eine Bahn eines Endpunkts eines Lichtvektors eines jeden der fokussierten Lichtflecke (100) in einer Ebene senkrecht zu einer Ausbreitungsrichtung periodisch und kontinuierlich ändert, sodass das Bearbeitungsmuster (200) als Ganzes zirkulare Polarisationsmerkmale oder elliptische Polarisationsmerkmale aufweist.

5. Verfahren für ein superhartes Material (600) nach Anspruch 1,
wobei die Methode auf eine Bearbeitungsvorrichtung angewendet wird, um ein superhartes Material (600) zu bearbeiten, um eine Schneidkante eines Schneidwerkzeugs zu bilden.

6. Vorrichtung zur Durchführung des Verfahrens zur Laserbearbeitung eines superharten Materials (600) nach Anspruch 1, umfassend:
eine Laserquelle, die dazu ausgebildet ist, einen Laserstrahl zu erzeugen;
einen Spiegel, der dazu ausgebildet ist, eine Richtung des Laserstrahls zu ändern,
**dadurch gekennzeichnet, dass** die Vorrichtung ferner Folgendes umfasst:
einen Fokussierspiegel, der dazu ausgebildet ist, einfallendes Laserlicht aufzunehmen und fokussierte Lichtflecke (100) zu bilden, um dem fokussierten Lichtfleck (100) lineare Polarisationsmerkmale zu verleihen;
einen Galvanometerscanner, der dazu ausgebildet ist, einen Abtastbereich der fokussierten Lichtflecke (100) zu steuern; und
eine Polarisationsantriebseinrichtung (500), die dazu ausgebildet ist, einen Polarisationsazimutwinkel eines austretenden Lasers derart zu ändern, dass der fokussierte Lichtfleck mit linearen Polarisationsmerkmalen die Laserbearbeitungsebene kontinuierlich entlang des Abtastpfades abtastet und ein Bearbeitungsmuster bildet, wobei das Bearbeitungsmuster entlang einer Konturbearbeitungsbahn einer Werkstü ckoberfläche bewegt wird, und wodurch eine direkte Beziehung zwischen einer Konturbearbeitungsbahnrichtung einer Oberfläche eines Werkstücks und einer Polarisationsrichtung entkoppelt wird, sodass die Polarisationsrichtung nur mit der Bewegung eines Galvanometerscanners zusammenhängt.

7. Vorrichtung nach Anspruch 6, wobei der Spiegel auf einem Optikjustiergestell oder dem Galvanometer montiert ist, um eine Abtastrichtung der fokussierenden Lichtflecken (100) nach Bedarf zu ändern und ein Bearbeitungsmuster (200) zu bilden.

8. Vorrichtung nach Anspruch 6, wobei der Fokussierspiegel mit einer Feldlinse mit mehreren Linsen ausgestattet ist.

9. Bearbeitungsvorrichtung, umfassend die Vorrichtung nach Anspruch 8, wobei die Bearbeitungsvorrichtung eine Bearbeitungsvorrichtung mit mehreren Bewegungsachsen in einem rechtshändigen kartesischen Koordinatensystem ist, wobei X-, Y- und Z-Achsen sich in einer geradlinigen Richtung bewegen und A-, B- und C-Achsen sich jeweils um die X-, Y- und Z-Achsen drehen.

## Revendications

1. Procédé d'usinage par laser d'un matériau superdur (600), le matériau superdur é tant un cermet, du diamant et du nitrure de bore cubique, ou un matériau composite comprenant un alliage et un ou plusieurs parmi le cermet, le diamant et le nitrure de bore cubique, le procédé comprenant : le découplage d'une relation directe entre une direction de trajectoire d'usinage de contour d'une surface d'une pièce et une direction de polarisation par le déplacement d'une tache lumineuse focalisée (100) présentant des caractéristiques de polarisation linéaire,
le procédé étant **caractérisé en ce que** :
un angle d'azimut de polarisation de la tache lumineuse focalisée (100) est modifié, de sorte que la direction de polarisation est uniquement liée au mouvement d'un galvanomètre, les taches lumineuses focalisées (100) d'un laser à polarisation linéaire é tant déplacées le long d'un chemin de balayage dans un plan, et un angle de polarisation du laser étant commandé en temps réel pendant le balayage, de sorte que les taches lumineuses focalisées (100) sont disposées séquentiellement le long du chemin de balayage en fonction de leurs angles de polarisation respectifs pour générer un motif d'usinage (200), puis le motif d'usinage (200) dans son ensemble est déplacé le long d'un chemin de déplacement sur une surface d'un matériau, et le matériau sur le chemin de déplacement est enlevé pour obtenir une configuration requise.

2. Procédé pour un matériau superdur (600) selon la revendication 1, dans lequel un angle d'azimut de polarisation d'un laser sortant est modifié en temps réel par un dispositif d'entraînement de polarisation (500), un faisceau laser traversant un trou débouchant central d'un moteur et un élément optique de polarisation disposé sur le moteur, et le moteur étant commandé pour entraîner l'élément optique de polarisation en révolution afin de modifier une direction de polarisation de la lumière sortante.

3. Procédé pour un matériau superdur (600) selon la revendication 1, dans lequel des points lumineux focalisés (100) sont déplacés autour d'un centre d'un motif d'usinage (200) et sont modifiés de manière synchrone avec des angles de polarisation, de sorte que les points lumineux focalisés (100) sont disposés séquentiellement le long du trajet de balayage selon leurs angles de polarisation respectifs pour générer le motif d'usinage (200), et ensuite le motif d'usinage (200) dans son ensemble est déplacé sur la surface de la pièce pour l'enlèvement de matière, afin d'obtenir un effet d'usinage avec une qualité d'usinage et une efficacité d'usinage équivalentes à celles d'un enlèvement de matière utilisant directement une lumière à polarisation azimutale et une lumière à polarisation radiale.

4. Procédé pour un matériau superdur (600) selon la revendication 1, dans lequel un laser est transmis à travers le galvanomètre pour émettre des points lumineux focalisé s (100) sur un plan d'usinage par laser, de sorte que les points lumineux focalisés (100) sont balayés le long d'un trajet de balayage prédéfini et forment un motif d'usinage (200), et ensuite le motif d'usinage (200) est déplacé le long de la trajectoire d'usinage de contour de la surface de la pièce pour enlever un matériau superdur (600) dans le plan d'usinage par laser ;
lorsque les points lumineux focalisés (100) sont balayés le long du trajet de balayage pr édéfini, une corrélation entre la direction de polarisation et le trajet de balayage est en outre définie, de sorte que les points lumineux focalisés (100) sont déplacés autour d'un centre du motif d'usinage (200) ; et
lorsque les directions de polarisation des points lumineux focalisés (100) disposés sé quentiellement le long du trajet de balayage sont identiques, le motif d'usinage (200) g énéré dans son ensemble présente des caractéristiques de polarisation linéaire ; ou
une trajectoire d'une extrémité de vecteur lumineux de chacun des points lumineux focalisés (100) dans un plan perpendiculaire à une direction de propagation est située sur une ligne droite passant par le centre du motif d'usinage (200), de sorte que le motif d'usinage (200) dans son ensemble présente des caractéristiques de polarisation radiale ; ou
une trajectoire d'une extrémité de vecteur lumineux de chacun des points lumineux focalisés (100) dans un plan perpendiculaire à une direction de propagation est située sur une ligne tangente du trajet de balayage des points lumineux focalisés (100), de sorte que le motif d'usinage (200) dans son ensemble présente des caractéristiques de polarisation azimutale ; ou
une trajectoire d'une extrémité de vecteur lumineux de chacun des points lumineux focalisés (100) dans un plan perpendiculaire à une direction de propagation intersecte une ligne tangente du trajet de balayage des points lumineux focalisés (100) avec un angle d'intersection supérieur à 0° et inférieur à 180°, de sorte que le motif d'usinage (200) dans son ensemble présente des caractéristiques de polarisation azimutale et des caractéristiques de polarisation radiale ; ou
une trajectoire d'une extrémité de vecteur lumineux de chacun des points lumineux focalisés (100) dans un plan perpendiculaire à une direction de propagation change de manière périodique et continue, de sorte que le motif d'usinage (200) dans son ensemble présente des caractéristiques de polarisation circulaire ou des caractéristiques de polarisation elliptique.

5. Procédé pour un matériau superdur (600) selon la revendication 1, dans lequel le procédé est appliqué à un dispositif d'usinage pour usiner un matériau superdur (600) afin de former un tranchant d'un outil de coupe.

6. Dispositif pour la mise en œuvre du procédé d'usinage par laser d'un matériau superdur (600) selon la revendication 1, comprenant :
une source laser, configurée pour générer un faisceau laser ;
un miroir réflecteur, configuré pour modifier une direction du faisceau laser,
**caractérisé en ce que** le dispositif comprend en outre :
un miroir focalisant, configuré pour recevoir la lumière laser incidente et former des taches lumineuses focalisées (100), pour conférer à la tache lumineuse focalisée (100) des caractéristiques de polarisation linéaire ;
un galvanomètre, configuré pour contrôler une plage de balayage des taches lumineuses focalisées (100) ; et
un dispositif d'entraînement de polarisation (500), configuré pour modifier un angle d'azimut de polarisation d'un laser sortant, de telle sorte que la tache lumineuse focalisé e présentant des caractéristiques de polarisation linéaire balaye en continu le plan d'usinage par laser le long du chemin de balayage, et forme un motif d'usinage, le motif d'usinage étant déplacé le long d'une trajectoire d'usinage de contour de surface de pièce, et découplant ainsi une relation directe entre une direction de trajectoire d'usinage de contour d'une surface d'une pièce et une direction de polarisation, de sorte que la direction de polarisation est uniquement liée au mouvement d'un galvanomètre.

7. Dispositif selon la revendication 6, dans lequel le miroir réflecteur est monté sur un cadre de réglage optique ou sur le galvanomètre afin de modifier, selon les besoins, une direction de balayage des taches lumineuses focalisées (100) et de former un motif d'usinage (200).

8. Dispositif selon la revendication 6, dans lequel le miroir de focalisation est équipé d'une lentille de champ multi-lentilles.

9. Dispositif d'usinage, comprenant le dispositif selon la revendication 8, dans lequel le dispositif d'usinage est un dispositif d'usinage à plusieurs axes de mouvement s'inscrivant dans un système de coordonnées cartésiennes direct, les axes X, Y et Z se déplaçant selon une direction rectiligne, et les axes A, B et C tournant respectivement autour des axes X, Y et Z.
